# EUROPÄISCHE PATENTSCHRIFT

(11) **EP 3 188 621 B1**
(45) Veröffentlichungstag und Bekanntmachung des Hinweises auf die Patenterteilung: **10.10.2018**
(21) Anmeldenummer: 15749784.3
(22) Anmeldetag: 07.08.2015
(51) Int. Cl.: A47C 31/12, A47C 9/00

(54) **ARBEITSPLATZSTUHLSYSTEM UND VERFAHREN ZUR JUSTIERUNG UND BENUTZUNG EINES ARBEITSPLATZSTUHLSYSTEMS**
OFFICE CHAIR SYSTEM AND METHOD FOR ADJUSTING AND USING AN OFFICE CHAIR SYSTEM
SYSTÈME DE SIÈGE DE POSTE DE TRAVAIL ET PROCÉDÉ D'AJUSTAGE ET D'UTILISATION D'UN SYSTÈME DE SIÈGE DE POSTE DE TRAVAIL

(30) Priorität: 01.09.2014 DE 102014112548
(43) Veröffentlichungstag der Anmeldung: 12.07.2017
(73) Patentinhaber: LOGICDATA Electronic & Software Entwicklungs GmbH, 8530 Deutschlandsberg (AT)
(72) Erfinder: KOCH, Walter, A-8541 Schwanberg (AT)
(74) Vertreter: Epping - Hermann - Fischer
(86) Internationale Anmeldenummer: PCT/EP2015/068287
(87) Internationale Veröffentlichungsnummer: WO 2016/034365

(56) Entgegenhaltungen:
- WO-A2-03/072953
- US-A1- 2009 273 441
- US-B1- 7 163 263

## Beschreibung

Die Erfindung betrifft ein Arbeitsplatzstuhlsystem, insbesondere ein Arbeitsplatzstuhlsystem mit einem verstellbaren Arbeitsplatzstuhl, und ein Verfahren zur Justierung und Benutzung eines solchen Arbeitsplatzsystems. Ein Stuhl kann hier und im Folgenden auch immer ein Sessel sein.

Arbeitsplatzstühle wie zum Beispiel Bürostühle mit verstellbaren Elementen sind seit längerem verfügbar. Solche Arbeitsplatzstühle bieten je nach Ausführungsform verschiedene Möglichkeiten zur Verstellung zum Beispiel der Sitzhöhe, der Höhe von Armlehnen, der Neigung der Rückenlehne und so weiter. Das auf ergonomische Gesichtspunkte bei der Benutzung von verstellbaren Arbeitsplatzstühlen bezogene Wissen von Benutzern derselben kann jedoch unvollständig sein. Dazu kann auch im Falle einer ergonomisch vorteilhaften Einstellung des Arbeitsplatzstuhls die persönliche Körperhaltung des Benutzers ergonomisch ungünstig sein, was zum Beispiel dazu führen kann, dass potentielle Vorteile des verstellbaren Arbeitsplatzstuhls nicht ausgenutzt werden.

Aus dem Dokument WO 2003/072953 A2 ist ein Bürostuhl mit Sensoren in der Sitzfläche und in der Rückenlehne zur Bestimmung einer Position eines Benutzers bekannt. Ein Mikrocomputer wertet die Signale der Sensoren aus und erzeugt eine Signalisierung an den Benutzer.

Das Dokument US 7,163,263 B1 zeigt einen verstellbaren Arbeitsplatzstuhl mit einem automatischen Verstellmechanismus.

Das Dokument US 2009/0273441 A1 zeigt ein Arbeitsplatzsystem, bei dem Komponenten wie ein Arbeitsplatzstuhl basierend auf der Identifikation eines Benutzers eingestellt werden können.

Eine zu lösende Aufgabe besteht daher darin, ein verbessertes Konzept für ein Arbeitsplatzstuhlsystem mit einem verstellbaren Arbeitsplatzstuhl sowie dessen Benutzung und/oder Justierung anzugeben, mittels welchem ein Benutzer, insbesondere ein Benutzer ohne ausgeprägtes Wissen über ergonomische Gesichtspunkte, den Arbeitsplatzstuhl in optimaler Weise einstellen und/oder benutzen kann.

Diese Aufgabe wird mit dem Gegenstand der unabhängigen Patentansprüche gelöst. Weiterbildungen und Ausgestaltungsformen sind Gegenstand der abhängigen Ansprüche.
Gemäß dem verbesserten Konzept wird einem Benutzer, basierend auf seiner Haltung und auf Positionen von Elementen eines Arbeitsplatzstuhls, eine Verstellung des Arbeitsplatzstuhls und/oder eine Veränderung seiner Haltung vorgeschlagen. Dadurch kann der Benutzer dazu angeleitet werden den Arbeitsplatzstuhl in optimaler Weise einstellen und/oder zu benutzen.
Ein Arbeitsplatzstuhlsystem gemäß dem verbesserten Konzept umfasst einen Arbeitsplatzstuhl, Sensormittel sowie wenigstens eine mit den Sensormitteln gekoppelte Berechnungseinheit. Die Sensormittel sind dazu eingerichtet, die Positionen der Elemente des Arbeitsplatzstuhls und/oder eine Haltung eines Benutzers des Arbeitsplatzstuhls zu bestimmen und basierend auf der Bestimmung ein Positionssignal zu erzeugen. Die Berechnungseinheit ist dazu eingerichtet, basierend auf dem Positionssignal ein erstes Rückmeldesignal zu erzeugen.Das erste Rückmeldesignal kann zum Beispiel Informationen über eine vorgeschlagene Anpassung einer Haltung des Benutzers und/oder über eine vorgeschlagene Veränderung der Positionen der Elemente des Arbeitsplatzstuhls enthalten.

Erfindungsgemäß umfasst das Arbeitsplatzstuhlsystem außerdem ein mit der Berechnungseinheit gekoppeltes Bedienelement, welches zur Ausgabe des ersten Rückmeldesignals, beispielsweise an den Benutzer, eingerichtet.

Erfindungsgemäß umfasst der Arbeitsplatzstuhl Verstellmittel zur Veränderung von Positionen von Elementen des Arbeitsplatzstuhls. Dabei sind die Verstellmittel dazu eingerichtet, eine Berührung und/oder eine Betätigung einer von zumindest zwei Komponenten der Verstellmittel zu detektieren und basierend auf der Detektion ein Verstellsignal zu erzeugen. Die Komponenten der Verstellmittel sind dabei beispielsweise als Hebel oder Schalter ausgeführt, die zum Beispiel an dem Arbeitsplatzstuhl angeordnet sind.

Dabei enthält das erste Rückmeldesignal Informationen über eine vorgeschlagene Veränderung der Positionen der Elemente des Arbeitsplatzstuhls. Außerdem ist der vorgeschlagenen Veränderung wenigstens eine der zumindest zwei Komponenten zugeordnet.

Die Berechnungseinheit ist weiterhin dazu eingerichtet, anhand des Verstellsignals eine Berührung und/oder eine Betätigung der der Veränderung zugeordneten Komponente zu überprüfen und basierend auf der Überprüfung ein zweites Rückmeldesignal zu erzeugen. Das Bedienelement ist dann dazu eingerichtet, das zweite Rückmeldesignal auszugeben, beispielsweise an den Benutzer.

In Ausführungsformen, bei denen die Sensormittel dazu eingerichtet sind die Haltung des Benutzers zu bestimmen, kann die Haltung beispielsweise mittelbar oder unmittelbar von den Positionen der Elemente des Arbeitsplatzstuhls bestimmt oder beeinflusst werden. Alternativ kann die Haltung aber auch unabhängig von den Positionen der Elemente bestimmt oder beeinflusst sein. Als Positionen der Elemente kommen zum Beispiel in Frage eine Sitzhöhe, eine Höhe einer Rückenlehne des Arbeitsplatzstuhls, ein Neigungswinkel der Rückenlehne des Arbeitsplatzstuhls, eine Höhe und/oder eine Neigung von Armlehnen des Arbeitsplatzstuhls, eine Sitztiefe oder weitere Positionen der genannten oder weiterer Elemente. Dabei sind die weiteren Positionen und/oder die weiteren Elemente abhängig von der konkreten Ausführungsform des Arbeitsplatzstuhls.

In den verschiedenen Ausführungsformen sind die Berechnungseinheit und das Bedienelement jeweils drahtgebunden oder drahtlos mit den Verstellmitteln und den Sensormitteln verbunden. Die Berechnungseinheit und das Bedienelement können ebenfalls drahtlos oder drahtgebunden miteinander gekoppelt sein.

Die Ausgabe des ersten und des zweiten Rückmeldesignals mittels des Bedienelements kann beispielsweise über optische, akustische oder haptische Signale oder Anweisungen oder Anweisungsfolgen erfolgen. In bevorzugten Ausführungsformen umfasst das erste Rückmeldesignal Informationen an den Benutzer, welche Elemente des Arbeitsplatzstuhls in welcher Reihenfolge und wie verstellt werden sollten, um beispielsweise eine ergonomisch besser angepasste Haltung oder Sitzposition zu erzielen.

Alternativ oder zusätzlich kann das erste Rückmeldesignal dem Benutzer auch anzeigen, wie er seine Haltung für eine ergonomisch bessere Haltung oder Sitzposition verändern könnte oder sollte, ohne dabei die Elemente des Arbeitsplatzstuhls verändern zu müssen. In einem solchen Anwendungsfall sind beispielsweise die Informationen über eine vorgeschlagene Veränderung der Positionen der Elemente des Arbeitsplatzstuhls optional. Außerdem sind die Verstellmittel in einem solchen Anwendungsfall nicht notwendigerweise eingerichtet, die Berührung und/oder Betätigung einer Komponente zu detektieren und das Verstellsignal zu erzeugen.

So ermöglicht das zweite Rückmeldesignal beispielsweise dem Benutzer mitzuteilen, ob er die richtige Komponente der Verstellmittel berührt oder betätigt. Beispielsweise durch optische, akustische oder haptische Signale kann der Benutzer dadurch zu einer korrekten oder vorteilhaften Bedienung des Arbeitsplatzstuhls angeleitet werden.

In verschiedenen Ausführungsformen des Arbeitsplatzstuhlsystems ist das Bedienelement als Personal Computer oder als mobiles Kommunikationsgerät ausgeführt.

Als mobiles Kommunikationsgerät kommen dabei vor allem ein Smartphone, ein Mobiltelefon, ein Tablet-Computer, ein Personal Digital Assistant, PDA, und ein anderer tragbarer Computer in Frage.

In wenigstens einer Ausführung des Arbeitsplatzstuhlsystems umfasst das Bedienelement die Berechnungseinheit. In wenigstens einer weiteren Ausführung umfasst der Arbeitsplatzstuhl die Berechnungseinheit.

In verschiedenen Ausführungen des Arbeitsplatzstuhlsystems sind die Komponenten der Verstellmittel als Hebel und/oder als Schalter ausgeführt. Des Weiteren verfügen die Komponenten über berührungsempfindliche Sensoren, welche die Detektion einer Berührung der jeweiligen Komponente erlauben. Alternativ oder zusätzlich können die Komponenten der Verstellmittel über druckempfindliche Sensoren verfügen, welche die Detektion einer Betätigung der jeweiligen Komponente erlauben.

Unter berührungsempfindlichen Sensoren sind hierbei solche Sensoren zu verstehen, welche eine Berührung oder lediglich eine Annäherung eines Objekts an den Sensor detektieren. Unter druckempfindlichen Sensoren sind zum Beispiel Schalter, Tippschalter, Tastschalter oder Klickschalter zu verstehen, welche eine Betätigung der Komponente durch Ziehen oder Drücken an der oder auf die Komponente oder durch sonstige Einwirkung auf die Komponente detektieren. Dabei ist unter der Betätigung der Komponente nicht notwendigerweise ein vollständiges Betätigen der Komponente, beispielsweise ein vollständiges Drücken eines Schalters oder ein vollständiges Ziehen eines Hebels, sondern insbesondere auch ein teilweises Betätigen der jeweiligen Komponente zu verstehen.

In wenigstens einer Ausführungsform des Arbeitsplatzstuhlsystems sind die berührungsempfindlichen Sensoren als kapazitive Sensoren ausgeführt.

In verschiedenen Ausführungsformen des Arbeitsplatzstuhlsystems umfassen die Sensormittel externe Sensormittel, die in oder an dem Bedienelement angeordnet und dazu eingerichtet sind, die Haltung des Benutzers zu bestimmen oder zum Teil zu bestimmen.

Solche externen Sensormittel können zum Beispiel Neigungssensoren, Abstandssensoren, Positionssensoren oder weitere Sensoren umfassen. In solchen Ausführungsformen hat der Benutzer die Möglichkeit, beispielsweise durch entsprechendes Positionieren des Bedienelements, zum Beispiel eines mobilen Kommunikationsgerätes, und unter Zuhilfenahme der Ausgabe der Rückmeldesignale, eine Einstellung, eine Veränderung oder eine Justierung der Elemente des Arbeitsplatzstuhls vorzunehmen. Das Positionieren des Bedienelements kann dabei ein Halten des Bedienelements in einer bestimmten Weise oder das Legen des Bedienelements an eine bestimmte Stelle, beispielsweise des Arbeitsplatzstuhls oder des Körpers des Benutzers, beinhalten. Alternativ oder zusätzlich kann mittels der externen Sensormittel beispielsweise unter Zuhilfenahme der Rückmeldesignale eine Haltung des Benutzers angepasst, insbesondere verbessert werden, ohne eine Veränderung der Elemente des Arbeitsplatzstuhls vorzunehmen.

In wenigstens einer Ausführungsform des Arbeitsplatzstuhlsystems ist die Berechnungseinheit dazu eingerichtet, basierend auf dem Positionssignal Ergonomiedaten zu erzeugen und das erste Rückmeldesignal basierend auf einem Vergleich der Ergonomiedaten und der Referenzdaten zu erzeugen.

Die Referenzdaten sind dabei zum Beispiel in der Berechnungseinheit oder dem Bedienelement gespeichert. Alternativ ist das Bedienelement oder die Berechnungseinheit dazu eingerichtet, aus einem Netzwerk, beispielsweise aus einem Intranet oder einem Internet, die Referenzdaten abzurufen. Die Referenzdaten beschreiben dabei eine ergonomisch optimale oder vorteilhafte Einstellung der Positionen der Elemente des Arbeitsplatzstuhls und können alternativ oder zusätzlich optimale, beispielsweise benutzerabhängige, Haltungsinformationen enthalten. Die Ergonomiedaten entsprechen im Wesentlichen dem Positionssignal in einer aufbereiteten Form, so dass beispielsweise ein Vergleich mit den Referenzdaten möglich ist.

In wenigstens einer Ausführungsform des Arbeitsplatzstuhlsystems ist die Berechnungseinheit dazu eingerichtet, die Referenzdaten basierend auf physischen Eigenschaften des Benutzers und/oder einer Abfrage einer Referenzdatenbank zu erzeugen.

Die physischen Eigenschaften des Benutzers können dabei zum Beispiel Größe, Gewicht, Längen der Beine, der Unterschenkel, der Oberschenkel, Längen der Arme, der Oberarme, der Unterarme oder weitere Informationen über den Körperbau des Benutzers enthalten. Alternativ oder zusätzlich können die physischen Eigenschaften des Benutzers auch aus allgemeineren Informationen, wie zum Beispiel einer Kleidergröße wie einer Hosengröße oder einer Hemdgröße, bestimmt werden. In einer solchen Ausführungsform ist die Berechnungseinheit beispielsweise dazu eingerichtet, aus den allgemeineren Informationen mittels Abfrage von oder Vergleich mit Daten aus einer Datenbank oder einer Tabelle die physischen Eigenschaften des Benutzers zu bestimmen oder abzuschätzen.

Verschiedene Ausführungsformen des Arbeitsplatzstuhlsystems umfassen außerdem eine Bildaufzeichnungseinrichtung, zum Beispiel eine Kamera oder eine 3D-Kamera, die derart eingerichtet und angeordnet ist, dass Bilddaten, die ein Abbild des Benutzers des Arbeitsplatzstuhlsystems darstellen, aufgenommen werden können und an das Bedienelement und/oder die Berechnungseinheit übermittelt werden können. Die Berechnungseinheit ist ferner dazu eingerichtet, die physischen Eigenschaften basierend auf den Bilddaten zu ermitteln.

Die Berechnungseinheit kann außerdem dazu eingerichtet sein den Benutzer anhand der Bilddaten zu identifizieren und daraufhin beispielsweise in einem Speicherelement des Arbeitsplatzstuhlsystems gespeicherte physische Eigenschaften oder andere Daten abzurufen.

In verschiedenen Ausführungsformen des Arbeitsplatzstuhlsystems umfassen die Sensormittel wenigstens einen weiteren berührungsempfindlichen Sensor, welcher dazu eingerichtet ist, einen physischen Kontakt oder Abstand des Benutzers mit dem weiteren berührungsempfindlichen Sensor zu detektieren. Die Berechnungseinheit ist ferner dazu eingerichtet, die Haltung des Benutzers basierend auf dem physischen Kontakt oder Abstand zu bestimmen oder teilweise zu bestimmen.

In verschiedenen Ausführungsformen umfassen die Sensormittel eine Mehrzahl von weiteren berührungsempfindlichen Sensoren, die an verschiedenen Stellen des Arbeitsplatzstuhls angeordnet sind. Beispielsweise können die weiteren berührungsempfindlichen Sensoren in einer Rückenlehne, einer Sitzfläche oder in Armlehnen des Arbeitsplatzstuhls angebracht sein. Mittels der weiteren berührungsempfindlichen Sensoren ist es beispielsweise möglich, ein falsches Sitzen des Benutzers über Auflagepunkte, beispielsweise des Rückens, des Gesäßes oder der Oberschenkel des Benutzers an der Rückenlehne beziehungsweise der Sitzfläche, zu detektieren. Wie bezüglich der verschiedenen Ausführungsformen des Arbeitsplatzstuhlsystems beschrieben, kann die Detektion dieser falschen Sitzhaltung durch Ausgabe der Rückmeldesignale zur weiteren Optimierung einer Sitzhaltung und einer Position des Benutzers herangezogen werden.

In verschiedenen Ausführungsformen des Arbeitsplatzstuhlsystems ist der wenigsten eine weitere berührungsempfindliche Sensor als kapazitiver Sensor ausgeführt.

Anhand des verbesserten Konzepts wird auch ein Verfahren zur Justierung und Benutzung eines Arbeitsplatzstuhlsystems angegeben. Das Arbeitsplatzstuhlsystem umfasst dabei einen Arbeitsplatzstuhl mit Verstellmitteln zur Veränderung von Positionen von Elementen des Arbeitsplatzstuhls.

Das Verfahren umfasst ein Bestimmen von Positionen von Elementen des Arbeitsplatzstuhlsystems und/oder einer Haltung eines Benutzers. Basierend auf der Bestimmung wird ein Positionssignal erzeugt. Das Verfahren umfasst weiterhin ein Erzeugen eines ersten Rückmeldesignals basierend auf dem Positionssignal, wobei das erste Rückmeldesignal Informationen über eine vorgeschlagene Veränderung der Positionen der Elemente des Arbeitsplatzstuhls und/oder der Haltung des Benutzers enthält und der vorgeschlagenen Veränderung wenigstens eine von zumindest zwei Komponenten der Verstellmittel zugeordnet ist. Des Weiteren wird das erste Rückmeldesignal an den Benutzer ausgegeben. Ein zweites Rückmeldesignal wird basierend auf einer Überprüfung einer Berührung und/oder einer Betätigung der der Veränderung zugeordneten Komponente erzeugt. Schließlich wird das zweite Rückmeldesignal ausgegeben.

Nach verschiedenen Ausgestaltungsformen des Verfahrens erfolgt die Überprüfung der Berührung der der Veränderung zugeordneten Komponente mittels berührungsempfindlichen Sensoren oder/und die Überprüfung der Betätigung der der Veränderung zugeordneten Komponente erfolgt mittels druckempfindlichen Sensoren.

Weitere Ausgestaltungsformen und Implementierungen des Verfahrens ergeben sich unmittelbar aus den verschiedenen Ausgestaltungsformen des Arbeitsplatzstuhlsystems.

Im Folgenden wird die Erfindung anhand beispielhafter Ausführungsformen unter Bezug auf die Zeichnungen im Detail erklärt. Komponenten, die funktionell identisch sind oder einen identischen Effekt haben, können mit identischen Bezugszeichen versehen sein. Identische Komponenten oder Komponenten mit identischer Funktion sind unter Umständen nur bezüglich der Figur erklärt, in der sie zuerst erscheinen. Die Erklärung wird nicht notwendigerweise in den darauffolgenden Figuren wiederholt.

Es zeigen:
- Figur 1: eine Ausführungsform des Arbeitsplatzstuhlsystems;
- Figur 2: eine weitere Ausführungsform des Arbeitsplatzstuhlsystems;
- Figur 3: eine weitere Ausführungsform des Arbeitsplatzstuhlsystems; und
- Figur 4: eine Ausgestaltungsform des Verfahrens zur Justierung und Benutzung eines Arbeitsplatzstuhlsystems anhand eines Flussdiagramms.

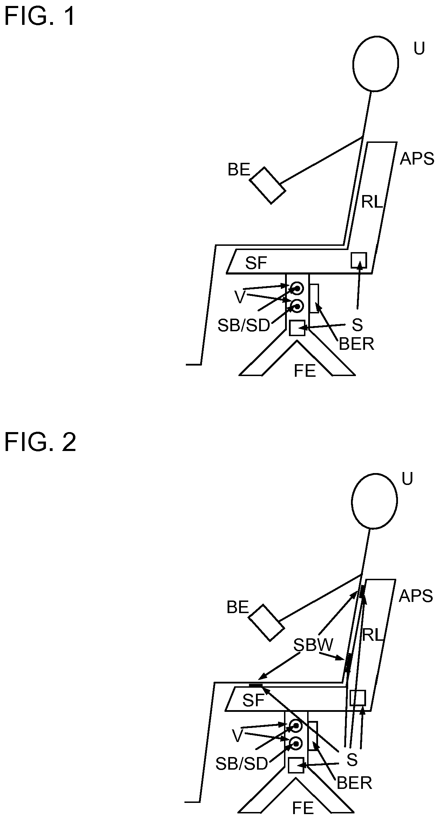

In Figur 1 ist eine beispielhafte Ausführungsform des Arbeitsplatzstuhlsystems gemäß dem verbesserten Konzept gezeigt. Das Arbeitsplatzstuhlsystem umfasst einen Arbeitsplatzstuhl APS mit einer Sitzfläche SF, einer Rückenlehne RL sowie einem Fußelement FE. Der Arbeitsplatzstuhl APS umfasst weiterhin Verstellmittel V, die hier als nicht ausgefüllte Kreise gezeigt sind und beispielsweise an dem Fußelement FE des Arbeitsplatzstuhls APS angeordnet sind. Die Verstellmittel V umfassen hier zwei Komponenten. Die Verstellmittel V umfassen hier berührungsempfindliche Sensoren SB oder druckempfindliche Sensoren SD, dargestellt als ausgefüllte Kreise. Im Falle von berührungsempfindlichen Sensoren SB, sind diese zum Beispiel als kapazitive Sensoren ausgeführt. Die Komponenten der Verstellmittel V selbst können zum Beispiel als Hebel oder Schalter ausgeführt sein.

Der Arbeitsplatzstuhl APS umfasst außerdem eine Berechnungseinheit BER die an dem Fußelement FE angeordnet ist. Das Arbeitsplatzstuhlsystem umfasst weiterhin Sensormittel S, die im gezeigten Ausführungsbeispiel in der Sitzfläche SF, zum Beispiel in der Nähe der Rückenlehne RL, sowie in dem Fußelement FE angeordnet sind. Ein schematisch dargestellter Benutzer U sitzt auf dem Arbeitsplatzstuhl APS und hält beispielsweise ein Bedienelement BE in der Hand, zum Beispiel ein graphisches Bedienelement BE, welches ebenfalls von dem Arbeitsplatzstuhlsystem umfasst ist. Das Bedienelement BE kann beispielsweise als mobiles Kommunikationsgerät, etwa als Smartphone oder als Tablet Computer, ausgeführt sein. Alternativ kann das Bedienelement BE ein Zubehörteil des Arbeitsplatzstuhl APS sein und kann beispielsweise auch in dem Arbeitsplatzstuhls APS integriert sein.

In dem gezeigten Ausführungsbeispiel ist das Bedienelement BE drahtlos mit der Berechnungseinheit BER gekoppelt. Dies kann zum Beispiel über eine Bluetooth Datenverbindung, über eine Funkverbindung, über eine WLAN-Verbindung, über eine Infrarotverbindung oder über eine andere geeignete Kommunikationstechnologie erfolgen. Die Berechnungseinheit BER ist ihrerseits drahtlos oder drahtgebunden mit den Sensormitteln S und den Verstellmitteln V gekoppelt. In alternativen Ausführungsformen kann das Bedienelement BE auch drahtgebunden mit der Berechnungseinheit BER gekoppelt sein.

Die spezifische räumliche Anordnung zum Beispiel der Verstellmittel V, der Sensormittel S und der Berechnungseinheit BER ist selbstverständlich nicht zwingend so wie hier schematisch gezeigt, sondern hängt von der konkreten Ausführungsform beispielsweise des Arbeitsplatzstuhls APS ab.

Die Sensormittel S sind beispielsweise geeignet, verschiedene Positionen von Elementen des Arbeitsplatzstuhls APS, etwa der Sitzfläche SF und der Rückenlehne RL, zu bestimmen. Zum Beispiel sind die Sensormittel S eingerichtet, eine Höhe der Sitzfläche SF, entsprechend einer Sitzhöhe, eine horizontale Position der Sitzfläche, beispielsweise einer Sitztiefe entsprechend, einer Neigung der Sitzfläche, eine Höhenposition der Rückenlehne RL und/oder einen Neigungswinkel der Rückenlehne RL zu bestimmen. Abhängig von einer konkreten Ausführung des Arbeitsplatzstuhls APS können beispielsweise weitere Positionen von Elementen des Arbeitsplatzstuhls APS von den Sensormitteln S bestimmt werden. Diese können zum Beispiel Positionen, beispielsweise Höhen, Neigungen und Rotationswinkel von Armlehnen (nicht gezeigt) sowie Abstände zwischen Armlehnen des Arbeitsplatzstuhls APS umfassen.

Die von den Sensormitteln S bestimmten Positionen können beispielsweise Rückschlüsse über eine Sitzposition und/oder eine Haltung des Benutzers U erlauben.

Basierend auf den von den Sensormitteln S bestimmten Positionen erzeugt die Berechnungseinheit BER ein Positionssignal. Die Berechnungseinheit BER erzeugt beispielsweise basierend auf dem Positionssignal ein erstes Rückmeldesignal, welches Informationen über eine vorgeschlagene Veränderung der Positionen der Elemente des Arbeitsplatzstuhls APS und/oder Informationen über eine vorgeschlagene Anpassung der Haltung des Benutzers U enthält. Dabei ist der vorgeschlagenen Veränderung der Positionen wenigstens eine der Komponenten der Verstellmittel zugeordnet. In einem konkreten Beispiel könnte die vorgeschlagene Veränderung einer Anweisung an den Benutzer U darstellen, eine Position eines der Elemente des Arbeitsplatzstuhls APS, beispielsweise die Höhe der Sitzfläche SF, zu verstellen. Die der vorgeschlagene Veränderung zugeordnete Komponente ist dann beispielsweise diejenige Komponente der Verstellmittel V, die betätigt werden muss um die Position des Elements, beispielsweise die Höhe der Sitzfläche SF, verstellen zu können.

Das erste Rückmeldesignal wird beispielsweise von der Berechnungseinheit BER an das Bedienelement BE übermittelt und von dem Bedienelement BE in geeigneter Weise an den Benutzer U ausgegeben. Die Ausgabe kann beispielsweise über eine grafische Darstellung der Komponenten der Verstellmittel V auf einer Anzeigeelement, beispielsweise einem Bildschirm, des Bedienelements BE erfolgen. Dabei kann die der vorgeschlagenen Veränderung zugeordnete Komponente beispielsweise hervorgehoben sein. Alternativ kann die Ausgabe auch über eine Darstellung eines Textes auf dem Anzeigeelement, über eine akustische Ausgabe, wie zum Beispiel eine Sprachanweisung oder ein Alarm- oder Warnsignal, oder über eine haptische Rückmeldung, wie zum Beispiel eine Vibration, erfolgen.

Daraufhin kann der Benutzer U beispielsweise eine der Komponenten der Verstellmittel V berühren oder betätigen in der Absicht eine Position eines entsprechenden Elements des Arbeitsplatzstuhls APS zu verändern. Die Betätigung kann dabei auch einer teilweise Betätigung oder einem Tippen auf die Komponente entsprechen.

Der berührungsempfindliche Sensor SB oder der druckempfindliche Sensor SD der von dem Benutzer berührten oder betätigten Komponente der Verstellmittel V ist eingerichtet die Berührung oder Betätigung zu detektieren. Basierend auf der Detektion erzeugen die Verstellmittel V ein Verstellsignal und übermitteln es beispielsweise an die Berechnungseinheit BER. Das Verstellsignal beinhaltet dabei Informationen darüber welche Komponente der Verstellmittel V der Benutzer U berührt oder betätigt hat. Anhand des Verstellsignals überprüft die Berechnungseinheit BER daraufhin beispielsweise ob die von dem Benutzer U berührte oder betätigte Komponente derjenigen Komponente entspricht, welche der vorgeschlagenen Veränderung zugeordnet ist. Auf diese Weise kann die Berechnungseinheit BER bestimmen ob der Benutzer im Begriff ist die "richtige" Komponente zu betätigen und entsprechend die "richtige" Position des "richtigen" Elements des Arbeitsplatzstuhls APS zu verstellen.

Basierend auf der Überprüfung erzeugt die Berechnungseinheit BER beispielsweise daraufhin ein zweites Rückmeldesignal und übermittelt es an das Bedienelement BE. Das Bedienelement BE kann das zweite Rückmeldesignal dann in geeigneter Weise an den Benutzer ausgeben. Der Benutzer U ist dadurch in der Lage informiert zu werden, ob er im Begriff ist, die "richtige" Komponente zu betätigen oder ob er eine andere Komponente betätigen sollte.

Eine Möglichkeit zur Benutzung des Arbeitsplatzstuhlsystems kann darin bestehen, dass der Benutzer U beispielsweise bei nachteilhafter ergonomischer Haltung oder Sitzposition in der beschriebenen Weise angeleitet wird, eine aus ergonomischer Sicht optimale oder verbesserte Haltung oder Sitzposition zu erzielen. Daher erzeugt die Berechnungseinheit BER das erste Rückmeldesignal beispielsweise dazu basierend auf einem Vergleich von Ergonomiedaten mit Referenzdaten. Die Ergonomiedaten sind beispielsweise von dem Positionssignal durch die Berechnungseinheit BER abgeleitet.

Die Referenzdaten können zum Beispiel von der Berechnungseinheit BER basierend auf physischen Eigenschaften des Benutzers U erzeugt werden. Dazu kann der Benutzer U beispielsweise die physischen Eigenschaften in das Bedienelement BE eingeben. Die physischen Eigenschaften können zum Beispiel Körpergröße, Körpergewicht und/der Abmessungen von Armen, Unterarmen, Oberarmen, Beinen, Unterschenkeln und/oder Oberschenkeln oder andere körperbezogene Abmessungen des Benutzers U umfassen. Alternativ oder in Kombination mit der Eingabe der physischen Daten kann der Benutzer auch allgemeine körperbezogene Daten, wie zum Beispiel eine Kleidergröße des Benutzers U, in das Bedienelement BE eingeben. Das Bedienelement BE kann dann zum Beispiel aus der Eingabe der allgemeinen körperbezogenen Daten die physischen Eigenschaften berechnen, abschätzen oder vervollständigen. Zur Erzeugung der Referenzdaten kann die Berechnungseinheit BER auch alternativ oder zusätzlich Daten aus einer Referenzdatenbank abfragen.

Alternativ oder zusätzlich können die physischen Eigenschaften des Benutzers U auch von der Berechnungseinheit BER basierend auf Bilddaten, welche ein Abbild des Benutzers U darstellen, erzeugen. In entsprechenden Ausführungsformen umfasst das Arbeitsplatzstuhlsystem weiterhin eine Kamera, zum Beispiel eine 3D-Kamera, oder eine andere Bildaufzeichnungseinrichtung (nicht gezeigt). Diese ist dann beispielsweise so an dem Arbeitsplatzstuhl APS oder einem zugehörigen Arbeitsplatz, zum Beispiel an einem Schreibtisch, angeordnet und eingerichtet, dass sie die Bilddaten erzeugen und an die Berechnungseinheit BER übermitteln kann.

In verschiedenen Ausführungsformen umfasst das Arbeitsplatzstuhlsystems weiterhin ein Speicherelement das zumindest mit der Berechnungseinheit BER gekoppelt ist. In dem Speicherelement können dann zum Beispiel die physischen Eigenschaften des Benutzers U, die Referenzdaten und/oder andere Informationen gespeichert und zur späteren Verwendung vorgehalten werden.

Alternative Ausführungsformen des Arbeitsplatzstuhlsystems basieren auf der in Figur 1 gezeigten Ausführungsform, kommen aber ohne die berührungsempfindlichen Sensoren SB und ohne die druckempfindlichen Sensoren SD aus. Zum Beispiel beinhaltet in einer solchen Ausführungsform das erste Rückmeldesignal keine Informationen über die vorgeschlagene Veränderung der Positionen der Elemente des Arbeitsplatzstuhls APS, sondern lediglich Informationen über eine vorgeschlagene Anpassung der Haltung des Benutzers U. Der Benutzer U kann dann seine Haltung und/oder Sitzposition anpassen um beispielsweise eine ergonomisch verbesserte Haltung beziehungsweise Sitzposition zu erreichen. Die Notwendigkeit des zweiten Rückmeldesignals kann dadurch entfallen.

In solchen Ausführungsformen kann die Ausgabe des ersten Rückmeldesignals alternativ oder zusätzlich zu der Ausgabe über das Bedienelement BE auch über ein Element des Arbeitsplatzstuhls APS erfolgen. Beispielsweise kann das erste Rückmeldesignal als haptisches, optisches und/oder akustisches Signal an den Benutzer U ausgegeben werden. Insbesondere kann das haptische Signal als Vibrationssignal ausgebildet sein. In solchen Ausführungsformen kann auch das Bedienelement BE optional sein.

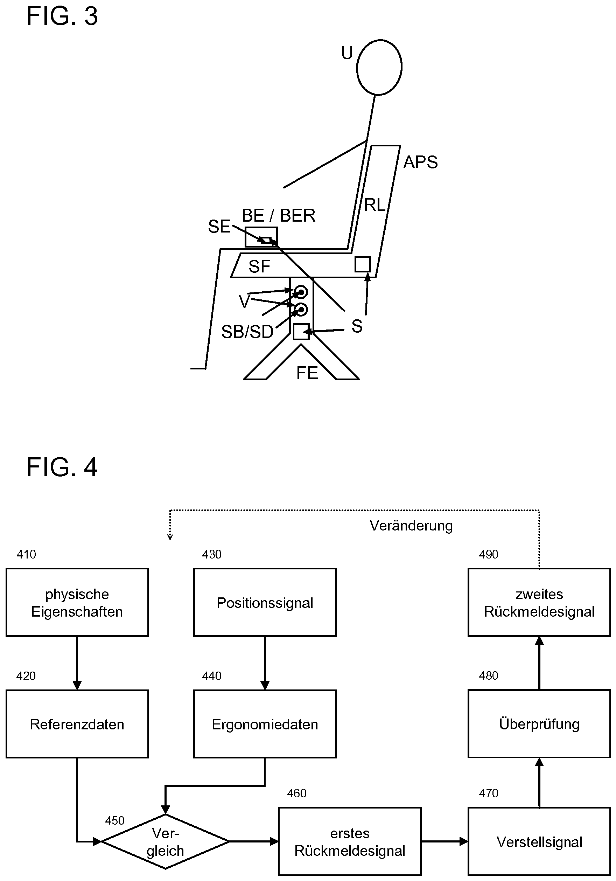

In Figur 2 ist eine weitere Ausführungsform des Arbeitsplatzstuhlsystems gezeigt, welche auf der Ausführungsform aus Figur 1 basiert. Zusätzlich umfassen die Sensormittel S hier weitere berührungsempfindliche oder druckempfindliche Sensoren SBW. Die berührungsempfindlichen oder druckempfindlichen Sensoren SBW sind beispielsweise als kapazitive Sensoren ausgeführt und im gezeigten Beispiel an der Sitzfläche SF und der Rückenlehne RL des Arbeitsplatzstuhls APS angeordnet. In Figur 3 sind drei weitere berührungsempfindliche oder druckempfindliche Sensoren SBW zu sehen. Allerdings können an der Rückenlehne RL und der Sitzfläche SF mehr als drei solcher Sensoren angeordnet sein, welche zum Teil aufgrund der Seitenansicht in Figur 3 nicht zu sehen sind.

Die berührungsempfindlichen oder druckempfindlichen Sensoren SBW können beispielsweise einen physischen Kontakt des Benutzers U mit den weiteren berührungsempfindlichen oder druckempfindlichen Sensoren SBW zu detektieren. Im gezeigten Fall detektieren die weiteren berührungsempfindlichen oder druckempfindlichen Sensoren SBW dadurch beispielsweise effektiv einen Kontakt des Rückens, des Gesäßes und der Oberschenkel des Benutzers U mit der Rückenlehne RS beziehungsweise der Sitzfläche SF.

Im gezeigten Ausführungsbeispiel erzeugt die Berechnungseinheit BER das Positionssignal beispielsweise unter anderem in Abhängigkeit der Detektion des physischen Kontakts. Der physische Kontakt, welcher beispielsweise eine von den Positionen der Elemente des Arbeitsplatzstuhls APS nicht oder nur zum Teil abhängige Korrelation mit der Haltung des Benutzers U aufweist, kann daher mit in die Erzeugung des ersten Rückmeldesignals einfließen. Die Ausgabe des ersten Rückmeldesignals kann dann zum Beispiel auch Anweisungen an den Benutzer U enthalten, alternativ oder zusätzlich zu einer Veränderung einer Position eines Elements des Arbeitsplatzstuhls APS auch eine direkte Änderung seiner Haltung oder Sitzposition vorzunehmen. Dadurch ist es mit einem solchen Arbeitsplatzstuhlsystem möglich, die ergonomische Haltung des Benutzers U weiter zu optimieren.

In Figur 3 ist ein weiteres Ausführungsbeispiel des Arbeitsplatzstuhlsystems gezeigt, welches auf dem aus Figur 1 basiert. In der hier gezeigten Ausführungsform ist die Berechnungseinheit BER in dem Bedienelement BE integriert. Außerdem umfassen die Sensormittel S externe Sensormittel SE, welche in dem Bedienelement BE integriert sind und die Haltung des Benutzers U bestimmen oder zum Teil bestimmen können. Die externen Sensormittel SE können zum Beispiel in dem Bedienelement BE integrierte Sensoren wie Neigungssensoren, Beschleunigungssensoren, Rotationssensoren, Magnetfeldsensoren, Näherungssensoren und/oder Magnetfeldsensoren umfassen. Das Positionssignal kann in einer solchen Ausführungsform basierend, insbesondere teilweise basierend, auf der mittels der externen Sensormittel SE bestimmten oder zum Teil bestimmten Haltung des Benutzers U erzeugt werden.

In Figur 3 liegt das Bedienelement BE beispielsweise auf einem Oberschenkel des Benutzers U. Zum Beispiel mittels eines Neigungssensors, der von den externen Sensormitteln S umfasst ist, können diese dann beispielsweise einen Winkel bestimmen welchen der Oberschenkel des Benutzers U mit der Horizontalen einschließt. In anderen Beispielen können selbstverständlich Positionen oder Ausrichtungen von anderen Gliedmaßen oder Körperteilen des Benutzers U auf diese oder ähnliche Weise bestimmt werden. Diese Information kann dann in die Erzeugung des Positionssignals und damit zum Beispiel auch in die Erzeugung der Ergonomiedaten einfließen.

Das erste Rückmeldesignal kann dann zum Beispiel effektiv unter Berücksichtigung der in der hier beschriebenen Weise bestimmten Haltung des Benutzers erzeugt werden. Dadurch kann erzielt werden, dass die Haltung des Benutzers U aus ergonomischer Sicht weiter optimiert wird. Im gezeigten Beispiel könnte der Benutzer U so beispielsweise dazu angeleitet werden die Positionen der Elemente des Arbeitsplatzstuhls APS und/oder seine Haltung so zu verändern, dass eine horizontale Ausrichtung des Oberschenkels resultiert.

Figur 4 zeigt eine Ausgestaltungsform des Verfahrens zur Justierung und Benutzung eines Arbeitsplatzstuhlsystems gemäß dem verbesserten Konzept anhand eines Flussdiagramms.

In Block 410 werden physische Eigenschaften des Benutzers U erfasst oder ermittelt. Dies erfolgt beispielsweise basierend Eingabe der physischen Daten und/oder von allgemeineren Informationen, wie zum Beispiel eine Kleidergröße, durch den Benutzer U in das Bedienelement BE oder durch aufnehmen von Bilddaten die ein Abbild des Benutzers U darstellen. Aus den physischen Daten werden in Block 420 beispielsweise Referenzdaten erzeugt. Alternativ oder zusätzlich können die Referenzdaten auch anhand einer Abfrage aus einer Referenzdatenbank erzeugt werden.

In Block 430 wird ein Positionssignal beispielsweise gemäß einer der beschriebenen Ausführungsformen des Arbeitsplatzstuhlsystems oder des Verfahrens erzeugt. Dazu können zum Beispiel Positionen von Elementen des Arbeitsplatzstuhls APS und/oder Informationen über die Haltung des Benutzers U herangezogen werden. In Block 430 werden basierend auf dem Positionssignal Ergonomiedaten so erzeugt, dass sie sich zum Vergleich mit den Referenzdaten eignen. Der Vergleich der Ergonomiedaten mit den Referenzdaten erfolgt daraufhin in Block 450.

In Block 460 wird basierend auf dem Vergleich ein erstes Rückmeldesignal erzeugt und an den Benutzer U ausgegeben. Dabei enthält das erste Rückmeldesignal Informationen über eine vorgeschlagene Veränderung der Positionen der Elemente des Arbeitsplatzstuhls APS und/oder der Haltung des Benutzers U. Außerdem ist der vorgeschlagenen Veränderung eine der Komponenten der Verstellmittel V zugeordnet. Zum Beispiel als Reaktion auf die Anzeige des ersten Rückmeldesignals kann der Benutzer U daraufhin beispielsweise eine Komponente der Verstellmittel V berühren oder betätigen in der Absicht eine Position eines zugehörigen Element des Arbeitsplatzstuhls APS zu verändern.

Die Berührung oder Betätigung wird erkannt und in Block 470 wird daraufhin basierend auf der Erkennung ein Verstellsignal erzeugt. In Block 480 wird anhand des Verstellsignals überprüft, ob die Komponente die der Benutzer berührt oder betätigt hat der der vorgeschlagenen Veränderung zugeordneten Komponente entspricht. Basierend darauf wird in Block 490 ein zweites Rückmeldesignal erzeugt und an den Benutzer U ausgegeben. Dadurch wird dem Benutzer U signalisiert ob er im Begriff ist die "richtige" Komponente zu betätigen beziehungsweise das entsprechende Element zu verstellen.

Danach kann der Benutzer U beispielsweise eine Veränderung der Position eines Elements des Arbeitsplatzstuhls APS und/oder seiner Haltung vornehmen und das Verfahren kann von vorne beginnen.

Mittels eines Arbeitsplatzstuhlsystems gemäß dem verbesserten Konzepts kann eine ergonomisch optimierte Justierung und Benutzung eines Arbeitsplatzstuhls erreicht werden.

Insbesondere kann eine ergonomisch optimale Benutzung des Arbeitsplatzstuhls APS auch nach einer optimalen Justierung erreicht werden. Dazu kann das Arbeitsplatzstuhlsystem beispielsweise über eine Speichereinrichtung verfügen, welche zum Beispiel Informationen darüber enthält, wie lange sich die Elemente des Arbeitsplatzstuhls APS bereits in bestimmten Positionen befinden. Das erste Rückmeldesignal kann dann beispielsweise benutzt werden dem Benutzer in bestimmten zeitlichen Abständen vorzuschlagen eine Veränderung der Positionen der Elemente des Arbeitsplatzstuhl oder der Haltung vorzunehmen.

Zusätzlich zu dem ersten und dem zweiten Rückmeldesignal kann auch eine akustische oder haptische Rückmeldung benutzt werden um den Benutzer beispielsweise auf eine ergonomisch ungünstige Einstellung des Arbeitsplatzstuhls beziehungsweise eine ergonomisch ungünstige Haltung aufmerksam zu machen. Die akustische oder haptische Rückmeldung, letztere kann zum Beispiel eine Vibration eines Elements des Arbeitsplatzstuhls sein, kann dabei beispielsweise von der Berechnungseinheit eingeleitet werden.

### Bezugszeichenliste

- APS: Arbeitsplatzstuhl
- V: Verstellmittel
- S: Sensormittel
- U: Benutzer
- BER: Berechnungseinheit
- BE: Bedienelement
- SB, SBW: berührungsempfindliche
- SD: druckempfindliche Sensoren
- SE: externe Sensormittel

## Patentansprüche

1. Arbeitsplatzstuhlsystem umfassend
- einen Arbeitsplatzstuhl (APS);
- Sensormittel (S) dazu eingerichtet Positionen von Elementen des Arbeitsplatzstuhls (APS) und/oder eine Haltung eines Benutzers (U) zu bestimmen und basierend auf der Bestimmung ein Positionssignal zu erzeugen;
- wenigstens eine mit den Sensormitteln (S) gekoppelte Berechnungseinheit (BER) dazu eingerichtet basierend auf dem Positionssignal ein erstes Rückmeldesignal zu erzeugen; und
- ein mit der Berechnungseinheit (BER) gekoppeltes Bedienelement (BE), welches zu einer Ausgabe des ersten Rückmeldesignals eingerichtet ist;
- wobei der Arbeitsplatzstuhl (APS) mit der Berechnungseinheit (BER) gekoppelte Verstellmittel (V) zur Veränderung der Positionen der Elemente des Arbeitsplatzstuhls (APS) umfasst, welche dazu eingerichtet sind eine Berührung und/oder eine Betätigung einer von zumindest zwei Komponenten der Verstellmittel (V) zu detektieren und basierend auf der Detektion ein Verstellsignal zu erzeugen; und wobei
- das erste Rückmeldesignal Informationen über eine vorgeschlagene Veränderung der Positionen der Elemente des Arbeitsplatzstuhls (APS) enthält;
- der vorgeschlagenen Veränderung eine der zumindest zwei Komponenten zugeordnet ist;
- die Berechnungseinheit (BER) dazu eingerichtet ist, anhand des Verstellsignals eine Berührung und/oder eine Betätigung der der Veränderung zugeordneten Komponente zu überprüfen und basierend auf der Überprüfung ein zweites Rückmeldesignal zu erzeugen; und
- das Bedienelement (BE) zur Ausgabe des zweiten Rückmeldesignals eingerichtet ist.

2. Arbeitsplatzstuhlsystem nach Anspruch 1, wobei das Bedienelement (BE) als mobiles Kommunikationsgerät ausgeführt ist.

3. Arbeitsplatzstuhlsystem nach einem der Ansprüche 1 oder 2, wobei das Bedienelement (BE) oder der Arbeitsplatzstuhl (APS) die Berechnungseinheit (BER) umfasst.

4. Arbeitsplatzstuhlsystem nach einem der Ansprüche 1 bis 3, wobei die zumindest zwei Komponenten der Verstellmittel (V)
- als Hebel und/oder Schalter ausgeführt sind;
- über berührungsempfindliche Sensoren (SB) verfügen, welche die Detektion einer Berührung der jeweiligen Komponente erlauben; und/oder
- über druckempfindliche Sensoren (SD) verfügen, welche die Detektion einer Betätigung der jeweiligen Komponente erlauben.

5. Arbeitsplatzstuhlsystem nach Anspruch 4, bei dem die berührungsempfindlichen Sensoren (SB) als kapazitive Sensoren ausgeführt sind.

6. Arbeitsplatzstuhlsystem nach einem der Ansprüche 1 bis 5, wobei die Sensormittel (S) externe Sensormittel (SE) umfassen, die in oder an dem Bedienelement (BE) angeordnet und dazu eingerichtet sind die Haltung des Benutzers (U) zu bestimmen oder zum Teil zu bestimmen.

7. Arbeitsplatzstuhlsystem nach einem der Ansprüche 1 bis 6, wobei die Berechnungseinheit (BER) dazu eingerichtet ist basierend auf dem Positionssignal Ergonomiedaten zu erzeugen und das erste Rückmeldesignal basierend auf einem Vergleich der Ergonomiedaten mit Referenzdaten zu erzeugen.

8. Arbeitsplatzstuhlsystem nach Anspruch 7, wobei die Berechnungseinheit (BER) dazu eingerichtet ist die Referenzdaten basierend auf physischen Eigenschaften des Benutzers (U) und/oder einer Abfrage einer Referenzdatenbank zu erzeugen.

9. Arbeitsplatzstuhlsystem nach Anspruch 8, außerdem umfassend eine Bildaufzeichnungseinrichtung, die derart angeordnet und dazu eingerichtet ist, dass Bilddaten, die ein Abbild eines Benutzers (U) des Arbeitsplatzstuhlsystems darstellen, aufgenommen und an die Berechnungseinheit (BER) übermittelt werden können und wobei die Berechnungseinheit (BER) dazu eingerichtet ist die physischen Eigenschaften basierend auf den Bilddaten zu ermitteln.

10. Arbeitsplatzstuhlsystem nach einem der Ansprüche 1 bis 9, wobei die Sensormittel (S) wenigstens einen weiteren berührungsempfindlichen oder druckempfindlichen Sensor (SBW) umfassen, welcher dazu eingerichtet ist, einen physischen Kontakt des Benutzers (U) mit dem weiteren berührungsempfindlichen oder druckempfindlichen Sensor (SBW) zu detektieren und wobei außerdem die Berechnungseinheit (BER) dazu eingerichtet ist das Positionssignal in Abhängigkeit der Detektion zu erzeugen.

11. Arbeitsplatzstuhlsystem nach Anspruch 10, wobei der weitere berührungsempfindliche oder druckempfindliche Sensor (SBW) als kapazitiver Sensor ausgeführt ist.

12. Verfahren zur Justierung und Benutzung eines Arbeitsplatzstuhlsystems umfassend einen Arbeitsplatzstuhl (APS) mit Verstellmitteln (V) zur Veränderung von Positionen von Elementen des Arbeitsplatzstuhls (APS), das Verfahren umfassend
- Bestimmen von Positionen von Elementen des Arbeitsplatzstuhls (APS) und/oder einer Haltung eines Benutzers (U)
- Erzeugen eines Positionssignals basierend auf der Bestimmung;
- Erzeugen eines ersten Rückmeldesignals basierend auf dem Positionssignal, wobei das erste Rückmeldesignal Informationen über eine vorgeschlagene Veränderung der Positionen der Elemente des Arbeitsplatzstuhls (APS) und/oder der Haltung des Benutzers (U) enthält und der vorgeschlagenen Veränderung eine von zumindest zwei Komponenten der Verstellmittel (V) zugeordnet ist;
- Ausgeben des ersten Rückmeldesignals;
- Erzeugen eines zweiten Rückmeldesignals basierend auf einer Überprüfung einer Berührung und/oder einer Betätigung der der Veränderung zugeordneten Komponente; und
- Ausgeben des zweiten Rückmeldesignals.

13. Verfahren nach Anspruch 12, wobei die Überprüfung der Berührung der der Veränderung zugeordneten Komponente mittels berührungsempfindlichen Sensoren (SB) erfolgt und/oder die Überprüfung der Betätigung der der Veränderung zugeordneten Komponente mittels druckempfindlichen Sensoren (SD) erfolgt.

14. Verfahren nach Anspruch 12 oder 13, wobei basierend auf dem Positionssignal Ergonomiedaten erzeugt werden, und das erste Rückmeldesignal basierend auf einem Vergleich der Ergonomiedaten mit Referenzdaten erzeugt wird.

15. Verfahren nach Anspruch 14, wobei die Referenzdaten basierend auf physischen Eigenschaften des Benutzers (U) und/oder einer Abfrage einer Referenzdatenbank erzeugt werden.

## Claims

1. Office chair system, including
- an office chair (APS);
- sensor means (S) configured to determine positions of elements of the office chair (APS) and/or a posture of a user (U) and to generate a position signal based on the determination;
- at least one calculation unit (BER) coupled to the sensor means (S), configured to generate a first feedback signal based on the position signal; and
- an operating element (BE) coupled to the calculation unit (BER), which is configured to output the first feedback signal;
- wherein the office chair (APS) includes adjustment means (V) coupled with the calculation unit (BER) for changing the positions of the elements of the office chair (APS), which are configured to detect a contact and/or an actuation of one component among at least two components of the adjustment means (V) and to generate an adjustment signal based on the detection; and wherein
- the first feedback signal contains information about a proposed change of the positions of the elements of the office chair (APS);
- one of the at least two components is assigned to the proposed change;
- the calculation unit (BER) is configured to verify a contact and/or an actuation of the component assigned to the change, and to generate a second feedback signal based on the verification; and
- the operating element (BE) is configured to output the second feedback signal.

2. Office chair system according to claim 1, wherein the operating element (BE) is configured as a mobile communication device.

3. Office chair system according to one of claims 1 or 2, wherein the operating element (BE) or the office chair (APS) includes the calculation unit (BER).

4. Office chair system according to one of claims 1 to 3, wherein the at least two components of the adjustment means (V)
- are configured as levers and/or switches;
- have touch-sensitive sensors (SB), which permit the detection of a contact of the respective component; and/or
- have pressure-sensitive sensors (SD), which permit the detection of an actuation of the respective component.

5. Office chair system according to claim 4, in which the touch-sensitive sensors (BE) are configured as capacitive sensors.

6. Office chair system according to one of claims 1 to 5, wherein the sensor means (S) include external sensor means (SE), which are arranged in or on the operating element (BE) and which are configured to determine or partly determine the posture of the user (U).

7. Office chair system according to one of claims 1 to 6, wherein the calculation unit (BER) is configured to generate ergonomic data based on the position signal and to generate the first feedback signal based on a comparison between the ergonomic data and reference data.

8. Office chair system according to claim 7, wherein the calculation unit (BER) is configured to generate the reference data based on physical properties of the user (U) and/or a retrieval of a reference database.

9. Office chair system according to claim 8, further including an image recording device, which is arranged and configured in such a way that image data, which represent an image of a user (U) of the office chair system, can be recorded and transmitted to the calculation unit (BER), and wherein the calculation unit (BER) is configured to determine the physical properties based on the image data.

10. Office chair system according to one of claims 1 to 9, wherein the sensor means (S) include at least one further touch-sensitive or pressure-sensitive sensor (SBW), which is configured to detect a physical contact of the user (U) with the further touch-sensitive or pressure-sensitive sensor (SBW), and wherein furthermore the calculation unit (BER) is configured to generate the position signal depending on the detection.

11. Office chair system according to claim 10, wherein the further touch-sensitive or pressure-sensitive sensor (SBW) is configured as a capacitive sensor.

12. Method for adjusting and using an office chair system including an office chair (APS) having adjustment means (V) for changing positions of elements of the office chair (APS), the method comprising
- determining positions of elements of the office chair (APS) and/or a posture of a user (U);
- generating a position signal based on the determination;
- generating a first feedback signal based on the position signal, wherein the first feedback signal contains information about a proposed change of the positions of the elements of the office chair (APS) and/or the posture of the user (U) and one of at least two components of the adjustment means (V) is assigned to the proposed change;
- outputting the first feedback signal;
- generating a second feedback signal based on a verification of a contact and/or an actuation of the component assigned to the change; and
- outputting the second feedback signal.

13. Method according to claim 12, wherein the verification of the contact of the component assigned to the change is effected by means of touch-sensitive sensors (SB) and/or the verification of the actuation of the component assigned to the change is effected by means of pressure-sensitive sensors (SD).

14. Method according to claim 12 or 13, wherein ergonomic data is generated based on the position signal, and the first feedback signal is generated based on a comparison between the ergonomic data and reference data.

15. Method according to claim 14, wherein the reference data is generated based on physical properties of the user (U) and/or a retrieval of a reference database.

## Revendications

1. Système de chaise pour poste de travail, comprenant
- une chaise pour poste de travail (APS) ;
- des moyens capteurs (S) configurés pour déterminer des positions d'éléments de la chaise pour poste de travail (APS) et/ou une posture d'un utilisateur (U) et pour générer un signal de position sur la base de la détermination ;
- au moins une unité de calcul (BER) couplée aux moyens capteurs (S), configurée pour générer un premier signal de retour sur la base du signal de position ; et
- un élément de commande (BE) couplé à l'unité de calcul (BER), lequel est configuré pour émettre le premier signal de retour ;
- la chaise de poste de travail (APS) comprenant des moyens de réglage (V) couplés à l'unité de calcul (BER) pour la modification des positions des éléments de la chaise pour poste de travail (APS), lesquels sont configurés pour détecter un contact et/ou une commande d'un d'au moins deux composants des moyens de réglage (V) et pour générer un signal de réglage sur la base de la détection ; et
- le premier signal de retour contenant des informations sur une modification proposée des positions des éléments de la chaise pour poste de travail (APS) ;
- un des au moins deux composants étant assigné à la modification proposée ;
- l'unité de calcul (BER) étant configurée pour vérifier, à l'aide du signal de réglage, un contact et/ou une commande du composant assigné à la modification et pour générer un deuxième signal de retour sur la base de la vérification ; et
- l'élément de commande (BE) étant configuré pour émettre le deuxième signal de retour.

2. Système de chaise pour poste de travail selon la revendication 1, l'élément de commande (BE) étant réalisé comme appareil de communication mobile.

3. Système de chaise pour poste de travail selon l'une quelconque des revendications 1 ou 2, l'élément de commande (BE) ou la chaise pour poste de travail (APS) comprenant l'unité de calcul (BER).

4. Système de chaise pour poste de travail selon l'une quelconque des revendications 1 à 3, les au moins deux composants des moyens de réglage (V)
- étant réalisés comme levier et/ou comme commutateur ;
- disposant de capteurs tactiles (SB) qui permettent de détecter un contact du composant respectif ; et/ou
- disposant de capteurs (SD) sensibles à la pression, qui permettent de détecter une commande du composant respectif.

5. Système de chaise pour poste de travail selon la revendication 4, les capteurs tactiles (SB) étant réalisés comme capteurs capacitifs.

6. Système de chaise pour poste de travail selon l'une quelconque des revendications 1 à 5, les moyens capteurs (S) comprenant des moyens capteurs externes (SE) qui sont disposés dans ou sur l'élément de commande (BE) et sont configurés pour déterminer la posture de l'utilisateur (U) ou pour la déterminer en partie.

7. Système de chaise pour poste de travail selon l'une quelconque des revendications 1 à 6, l'unité de calcul (BER) étant configurée pour générer des données ergonomiques sur la base du signal de position et pour générer le premier signal de retour sur la base d'une comparaison des données ergonomiques avec des données de référence.

8. Système de chaise pour poste de travail selon la revendication 7, l'unité de calcul (BER) étant configurée pour générer les données de référence sur la base de caractéristiques physiques de l'utilisateur (U) et/ou une interrogation d'une banque de données de référence.

9. Système de chaise pour poste de travail selon la revendication 8, comprenant en outre un dispositif de capture d'images qui est agencé et configuré de manière à ce que des données d'image, qui représentent une représentation d'un utilisateur (U) du système de chaise pour poste de travail, puissent être capturées et transmises à l'unité de calcul (BER), et l'unité de calcul (BER) étant configurée pour déterminer les caractéristiques physiques sur la base des données d'image.

10. Système de chaise pour poste de travail selon l'une quelconque des revendications 1 à 9, les moyens capteurs (S) comprenant au moins un capteur supplémentaire (SBW), tactile ou sensible à la pression, lequel est configuré pour détecter un contact physique de l'utilisateur (U) avec le capteur supplémentaire (SBW), tactile ou sensible à la pression, et l'unité de calcul (BER) étant en outre configurée pour générer le signal de position en fonction de la détection.

11. Système de chaise pour poste de travail selon la revendication 10, le capteur supplémentaire (SBW), tactile ou sensible à la pression, étant réalisé comme capteur capacitif.

12. Procédé d'ajustement et d'utilisation d'un système de chaise pour poste de travail, comprenant une chaise pour poste de travail (APS) ayant de moyens de réglage (V) destinés à modifier les positions d'éléments de la chaise pour poste de travail (APS), le procédé comprenant
- détermination de positions d'éléments de la chaise pour poste de travail (APS) et/ou d'une posture d'un utilisateur (U)
- génération d'un signal de position sur la base de la détermination ;
- génération d'un premier signal de retour sur la base du signal de position, le premier signal de retour contenant des informations sur une modification proposée des positions des éléments de la chaise pour poste de travail (APS) et/ou de la posture de l'utilisateur (U), et un d'au moins deux composants des moyens de réglage (V) étant assigné à la modification proposée ;
- émission du premier signal de retour ;
- génération d'un deuxième signal de retour sur la base d'une vérification d'un contact et/ou d'une commande du composant assigné à la modification ; et
- émission du deuxième signal de retour.

13. Procédé selon la revendication 12, la vérification du contact du composant assigné à la modification étant réalisée au moyen de capteurs tactiles (SB) et/ou la vérification de la commande du composant assigné à la modification étant réalisée au moyen de capteurs (SD) sensibles à la pression.

14. Procédé selon la revendication 12 ou 13, des données ergonomiques étant générées sur la base du signal de position, et le premier signal de retour étant généré sur la base d'une comparaison des données ergonomiques avec des données de référence.

15. Procédé selon la revendication 14, les données de référence étant générées sur la base de caractéristiques physiques de l'utilisateur (U) et/ou d'une interrogation d'une banque de données de référence.
